# EUROPÄISCHE PATENTSCHRIFT

(11) **EP 4 632 512 B1**
(45) Veröffentlichungstag und Bekanntmachung des Hinweises auf die Patenterteilung: **18.11.2026**
(21) Anmeldenummer: 24169499.1
(22) Anmeldetag: 10.04.2024
(51) Int. Cl.: G05B 19/418

(54) **VERFAHREN ZUR AUSGABE EINER RÄUMLICHEN ANGABE BEI EINER INDUSTRIELLEN ANLAGE**
METHOD FOR OUTPUTTING A SPATIAL INDICATION IN AN INDUSTRIAL INSTALLATION
PROCÉDÉ DE SORTIE D'UNE INDICATION SPATIALE DANS UNE INSTALLATION INDUSTRIELLE

(43) Veröffentlichungstag der Anmeldung: 15.10.2025
(73) Patentinhaber: Murrelektronik GmbH, 71570 Oppenweiler (DE)
(72) Erfinder: Pfestorf, Sebastian, 71522 Backnang (DE); Zeller, Dr. Paul, 74223 Flein (DE)
(74) Vertreter: Bösherz Goebel Patentanwälte

(56) Entgegenhaltungen:
- EP-A1- 4 345 554
- WO-A1-2022/156991
- US-A1- 2005 078 967

## Beschreibung

Die vorliegende Erfindung betrifft ein Verfahren zur Ausgabe einer räumlichen Angabe bei einer industriellen Anlage. Ferner bezieht sich die Erfindung auf ein System, ein Computerprogramm sowie eine Vorrichtung.

### Stand der Technik

Aus dem Stand der Technik sind Anschlusselemente zur Verbindung von Komponenten einer industriellen Anlage bekannt. In der Regel erfolgt die Installation der Anschlusselemente und Komponenten in der Anlage durch das Anschließen entsprechender Kabel und Steckverbindungen an den Ports der Anschlusselemente. Die Anschlusselemente werden dabei bspw. über IO-Link-Verbindungen mit den Komponenten verschaltet. Um die einzelnen Anschlusselemente und Komponenten in der Anlage zu identifizieren und zu lokalisieren, werden üblicherweise Schaltpläne durch einen Installateur ausgewertet.

Die Identifizierung und Lokalisierung der Anschlusselemente und Komponenten in der Anlage kann problematisch sein, insbesondere, wenn die Schaltpläne unvollständig oder ungenau sind. Ebenfalls kann es eine Herausforderung sein, die räumliche Lokalisierung in der realen Anlage anhand der Schaltpläne vorzunehmen.

Aus dem Stand der Technik ist ferner ein Aufbau der Anschlusselemente bekannt, bei welchem Leuchtmittel wie LEDs vorgesehen sind, die verwendet werden, um den Betriebszustand eines jeweiligen Ports des Anschlusselements anzuzeigen.

Herkömmliche Lösungen sind aus den Druckschriften EP 4345554 A1, US 2020011696 A1, US 2012143495 A1 und WO 2022156991 A1 bekannt.

### Offenbarung der Erfindung

Es ist eine Aufgabe der vorliegenden Erfindung, die voranstehend beschriebenen Nachteile zumindest teilweise zu beheben. Insbesondere ist es Aufgabe der vorliegenden Erfindung, eine Verbesserung bei der Lokalisierung von Geräten wie Komponenten und Anschlusselementen in der Anlage zu ermöglichen.

Gegenstand der Erfindung ist ein Verfahren mit den Merkmalen des Anspruchs 1, ein System mit den Merkmalen des Anspruchs 11, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren zur Ausgabe einer räumlichen Angabe bei einer industriellen Anlage, insbesondere einer elektrischen Maschine oder einer industriellen Automatisierungsanlage, bei welcher eine Verbindung, vorzugsweise dezentrale Verschaltung, von Komponenten der Anlage, insbesondere im Feld, durch mehrere Anschlusselemente vorgesehen ist. Die Anschlusselemente können eine Automatisierungs- und/oder Verteilungsfunktion in der Anlage haben und hierzu bspw. als Module mit mehreren Anschlüssen für weitere Komponenten, vorzugsweise als Verteiler, ausgebildet sein. Allgemein können die Anschlusselemente als Geräte der Anlage ausgebildet sein, wie z. B. Aktoren und/oder Sensoren und/oder Feldbusmodule und/oder Hubs und/oder Klemmkästen und/oder Mastermodule, vorzugsweise IO-Link-Master, und/oder Verbindungselemente wie Kabel und/oder Steckverbinder und/oder Motoransteuerungen und/oder Ventile und/oder dergleichen. Dabei kann das jeweilige Anschlusselement zumindest einen Anschluss, vorzugsweise einen Port und/oder eine Klemme, aufweisen.

Die Anschlusselemente können eine Automatisierungs- und/oder Verteilungsfunktion in der Anlage haben und damit beispielsweise die Steuerung und/oder Regelung von Prozessen unterstützen und/oder die Verteilung von Energie und/oder Signalen und/oder Daten ermöglichen. Die Komponenten können hingegen auch solche Geräte umfassen, welche keine Automatisierungs- und/oder Verteilungsfunktion in der Anlage haben.

Die Verbindung der Komponenten der Anlage, vorzugsweise über die Anschlusselemente, kann im Feld erfolgen. "Im Feld" bedeutet insbesondere in diesem Zusammenhang, dass die Komponenten und/oder Anschlusselemente nicht zentral im Schaltschrank verbunden sind, sondern dezentral an verschiedenen Orten innerhalb der Anlage verteilt sind und dort miteinander verbunden werden können. Dies ermöglicht eine flexible und platzsparende Installation der Anlage und erleichtert auch Wartungs- und Reparaturarbeiten vor Ort.

Unter einer Ausgabe einer räumlichen Angabe kann dabei insbesondere gemeint sein, dass eine Position wie ein Ort im zwei- oder dreidimensionalen Raum angegeben wird. Dies kann bei der Erfindung beispielsweise durch eine visuelle Darstellung erfolgen.

Das Verfahren kann gemäß einem ersten Verfahrensschritt umfassen, welcher vorzugsweise automatisiert durchgeführt wird und/oder computerimplementiert ist: Spezifizieren der räumlichen Angabe, welche für einen Benutzer ausgegeben werden soll, um eine räumliche Position in der Anlage anzugeben. Darunter ist insbesondere zu verstehen, dass eine vorzugsweise digitale Spezifikation der Angabe erfolgt, welche auf eine räumliche Position in der Anlage verweist. Diese spezifizierte räumliche Angabe kann bspw. Koordinaten der Anlage umfassen. Alternativ oder zusätzlich kann die spezifizierte räumliche Angabe auch eine andere Information umfassen, die zur Herleitung der Position dienen kann. Dies kann bspw. die Kennzeichnung eines Geräts wie einer Komponente oder eines Anschlusselements sein, dessen Position in der Anlage bereits bekannt ist. Somit kann die spezifizierte räumliche Angabe ggf. auch einfach das gesuchte Gerät benennen.

Die räumliche Position in der Anlage kann z. B. dadurch angegeben werden, dass ein Einbauort und/oder ein Kennzeichen einer Installationsvorgabe wie ein BMK (Betriebsmittelkennzeichen) und/oder eine E/A-Adresse angegeben wird. Entsprechend kann die Spezifikation der räumlichen Angabe eine Identifikation eines Einbauorts und/oder eines Kennzeichens einer Installationsvorgabe/eines Schaltplans wie eines BMK und/oder einer E/A-Adressierung und/oder dergleichen betreffen.

Das Verfahren kann als weiteren Verfahrensschritt umfassen, welcher vorzugsweise automatisiert durchgeführt wird und/oder computerimplementiert ist: Bereitstellen einer Anordnungsspezifikation der Anschlusselemente, welche für eine räumliche Anordnung der Anschlusselemente in der Anlage spezifisch ist. Die Anordnungsspezifikation kann bspw. die räumlichen Koordinaten der Anschlusselemente der Anlage umfassen. Dabei kann die Anordnungsspezifikation ggf. auch automatisiert generiert werden, z. B. durch die Auswertung eines digitalen Schaltplans der Anlage. Zusätzlich ist es optional vorgesehen, dass die Anordnungsspezifikation auch für die räumliche Anordnung weiterer Geräte und insbesondere der Komponenten in der Anlage spezifisch ist.

Das Verfahren kann als weiteren Verfahrensschritt umfassen, welcher vorzugsweise automatisiert durchgeführt wird und/oder computerimplementiert ist: Ermitteln eines Signalisierungsschemas auf Basis der spezifizierten räumlichen Angabe und der bereitgestellten Anordnungsspezifikation. Hierbei kann unter Berücksichtigung der räumlichen Anordnung der Anschlusselemente eine Auswahl der Anschlusselemente durch das Signalisierungsschema spezifiziert werden, die geeignet ist, um durch eine Ausgabe durch die jeweils ausgewählten Anschlusselemente die räumliche Position für den Benutzer erkennbar zu machen. Mit anderen Worten können anhand des Signalisierungsschemas die Anschlusselemente so angesteuert werden, dass sie eine Ausgabe vornehmen, die die räumliche Position für den Benutzer erkennbar macht. Dies ist in einem konkreten Beispiel durch das Aufleuchten von Leuchtmitteln der Anschlusselemente möglich, welche damit eine Richtungsangabe oder einen Weg zur räumlichen Position angeben. Hierzu wird insbesondere eine Anzeigemuster genutzt, dass eine Navigation zur räumlichen Position ermöglicht. Das Anzeigemuster kann aus dem relativen räumlichen Ort der Anschlusselemente zueinander resultieren, welche ein aktiviertes Leuchtmittel aufweisen. Ebenfalls ist es möglich, dass bei dem Ermitteln des Signalisierungsschemas eine gewünschte Ausgangsposition wie ein aktueller Ort des Benutzers berücksichtigt wird, um die Auswahl der Anschlusselemente festzulegen. Bspw. werden hierbei diejenigen Anschlusselemente ausgewählt, die sich als nächstens an einem Weg zwischen der gewünschten Ausgangsposition bzw. dem aktuellen Ort des Benutzers und der anzugebenden räumlichen Position in der Anlage befinden.

Um bspw. von einer gewünschten Ausgangsposition, an welcher sich z. B. der Benutzer aktuell befindet, zu der räumlichen Position zu navigieren, kann:
- in einem ersten Schritt die Ausgangsposition, bevorzugt eine Position des Benutzers, ermittelt werden, z. B. anhand einer Benutzereingabe und/oder eines Näherungssensors,
- in einem weiteren Schritt ein Vektor oder eine Strecke oder ein Weg oder dergleichen von der Ausgangsposition zur anzugebenden räumlichen Position berechnet werden,
- in einem weiteren Schritt diejenigen Anschlusselemente bestimmt werden, welche sich am nächsten zum berechneten Vektor oder zur Strecke oder zum Weg oder dergleichen befinden,
- über das Signalisierungsschema diese bestimmten Anschlusselemente ausgewählt werden, um die Ausgabe vorzunehmen, und vorzugsweise die Aktivierung der jeweiligen Leuchtmittel vorzunehmen.

Das Verfahren kann dann als weiteren Verfahrensschritt umfassen, welcher vorzugsweise automatisiert durchgeführt wird und/oder computerimplementiert ist: Initiieren der Ausgabe durch die jeweils ausgewählten Anschlusselemente gemäß dem ermittelten Signalisierungsschema. Dies kann bspw. eine Aktivierung von Ausgabe- und insbesondere der Leuchtmittel der ausgewählten Anschlusselemente umfassen.

Die räumliche Angabe ist die Angabe eines durch den Benutzer gesuchten Geräts, wie einer Komponente oder eines Anschlusselements.

Die Anordnungsspezifikation ist notwendig, um zur Bildung eines grafischen Musters wie einer Leuchtkette zu wissen, an welcher Position die Anschlusselemente in der Anlage angeordnet sind. Hierzu kann die Anordnungsspezifikation z. B. bei einer Installation der Anlage und/oder anhand einer Installationsdokumentation festgelegt werden. Das Signalisierungsschema wird dann ermittelt, um diejenigen Anschlusselemente auszuwählen, die zusammen (wenn sie die Ausgabe im Gegensatz zu den nicht ausgewählten Anschlusselementen durchführen) das Muster bzw. die Leuchtkette ergeben.

Zusätzlich zur Ausgabe durch die jeweils ausgewählten Anschlusselemente kann optional auch noch die Ausgabe von ein oder mehreren Lampen der Anlage initiiert werden. Dabei können die Lampen ebenfalls im Signalisierungsschema berücksichtigt werden. Die Lampen können dabei bspw. als Maschinenleuchten ausgebildet sein. Die Lampen können sich von den Anschlusselementen dadurch unterscheiden, dass sie keine Automatisierungs- und/oder Verteilungsfunktion haben, sondern eine reine Beleuchtungsfunktion.

Die Anlage, vorzugsweise elektrische und/oder industrielle Anlage, ist insbesondere als eine elektrische Maschine und/oder eine industrielle Automatisierungsanlage ausgebildet. Beispiele für eine solche industrielle und insbesondere elektrische Anlage sind eine Automatisierungsanlage wie ein elektrisches Steuerungssystem, ein elektrisches Mess- und Regelungssystem, ein elektrisches Antriebssystem oder eine Förder- und/oder Fertigungsanlage. Die industrielle Anlage kann ferner eine hydraulische oder eine pneumatische oder eine fluide oder eine mechanische Anlage sein. Bei der Anlage können entsprechend - automatisiert gesteuert - Flüssigkeiten oder Gase durch Rohrleitungen oder Ventile transportiert oder ein Kühlmittel zugeführt werden oder mechanische Kräfte auf ein Objekt ausgeübt werden, um eine gewünschte Funktion bereitzustellen. Beispiele für solche Anlagen sind eine hydraulische Presse, eine pneumatische Förderanlage, eine fluide Kühlanlage oder eine mechanische Fertigungsmaschine. Eine Installationsdokumentation wie ein Schaltplan kann in diesen Fällen angeben, wie die elektrische, hydraulische, pneumatische, fluide oder mechanische Anlage aufgebaut ist und wie die verschiedenen Komponenten miteinander verbunden/verschaltet sind, um eine gewünschte Funktion auszuführen. Die Anlage ist bspw. als eine industrielle Automatisierungsanlage oder eine elektrische Maschine oder eine Produktionsanlage oder eine Fertigungslinie ausgebildet. Dabei kann die Anlage mehrere Komponenten aufweisen, z. B. Geräte (d. h. insbesondere Betriebsmittel) wie Aktoren oder Sensoren oder Steuerungen oder Antriebe oder Schaltanlagen oder Ventilinseln oder dergleichen. Optional können auch Verbindungsmittel wie Kabel oder Steckverbinder oder dergleichen als Komponenten der Anlage verstanden werden.

Im Rahmen der Erfindung kann ein Anschlusselement ein Modul und/oder einen Verteiler bezeichnen, welcher vorzugsweise zur Verbindung, insbesondere dezentralen Verschaltung, von Komponenten wie Aktoren, Sensoren und Maschinen in der Anlage dient. Dabei kann das Modul und/oder der Verteiler als ein Feldbusmodul ausgebildet sein, welches über einen Feldbus mit einer zentralen Steuerungseinrichtung wie einer SPS (Speicherprogrammierbaren Steuerung) verbunden ist. Feldbusmodule ermöglichen damit die Kommunikation zwischen der Steuerungseinrichtung und den Komponenten unter Verwendung eines Feldbusprotokolls wie PROFIBUS, PROFINET, CANopen oder EtherCAT. Es können an dem Verteiler mehrere Komponenten angeschlossen werden, ggf. auch über IO-Link und insbesondere, um auf Basis/mittels eines empfangenen Feldbussignals die Komponenten anzusteuern und/oder auszulesen. Eine weitere mögliche Variante eines Verteilers kann ggf. auch direkt ein elektrisches Steuersignal und/oder Sensorsignal zwischen der zentralen Steuerungseinrichtung und der Komponente weiterleiten. Ferner kann der Verteiler als ein I/O-Modul ausgebildet sein, bei dem die angeschlossenen Komponenten nicht oder nicht nur über einen Feldbus, sondern (auch) über digitale oder analoge Ein- und Ausgänge über den Verteiler mit der Steuerungseinrichtung verbunden werden. Der Verteiler dient damit als Schnittstelle zwischen Steuerungseinrichtung und Komponenten wie Sensoren, Aktoren und Maschinen und kann eine Umwandlung und Verarbeitung von Signalen aus der Steuerungseinrichtung in für die Komponenten nutzbare Signale und umgekehrt vornehmen. Die Ein- und Ausgänge ermöglichen dabei eine Übertragung von Prozessdaten, um die Funktionalität der Anlage bereitzustellen.

Das Anschlusselement, vorzugsweise Modul, kann ferner als ein IO-Link-Modul ausgebildet sein. Dies bedeutet, dass die Kommunikation zwischen dem Anschlusselement und den angeschlossenen Komponenten über den IO-Link-Standard erfolgt. IO-Link ermöglicht eine digitale Kommunikation mit den Komponenten und bietet eine hohe Flexibilität bei der Anbindung von Komponenten unterschiedlicher Hersteller. Das Anschlusselement kann dabei als IO-Link-Master oder IO-Link-Device ausgebildet sein und ermöglicht somit eine einfache Integration von IO-Link-Komponenten in die Verbindung/dezentrale Verschaltung der Anlage. Durch den Einsatz von IO-Link können zudem umfangreiche Diagnose- und Parametrierungsmöglichkeiten genutzt werden, um eine effiziente und zuverlässige Steuerung der Anlage zu gewährleisten. Darüber hinaus kann das Anschlusselement eine Feldbusschnittstelle aufweisen (und daher gleichzeitig auch als Feldbusmodul ausgebildet sein), um bspw. Steuerungsbefehle und/oder eine Kommunikation über einen Feldbus mit einer zentralen Steuereinrichtung und/oder weiteren Anschlusselementen zu ermöglichen.

Des Weiteren ist es im Rahmen der Erfindung optional möglich, dass das Signalisierungsschema die Auswahl der Anschlusselemente derart spezifiziert, dass aus den einzelnen Ausgaben durch die jeweils ausgewählten Anschlusselemente die gesamte Ausgabe der räumlichen Angabe zusammengesetzt wird. Mit anderen Worten kann es vorgesehen sein, dass bei einer Automatisierungsanlage die dezentral zur Verschaltung genutzten Anschlusselemente synchronisiert eine räumliche Handlungs- und/oder Installationsinformation darstellen. Dies kann konkret eine Leuchtkette sein.

Das Signalisierungsschema spezifiziert die Auswahl der Anschlusselemente derart dass aus den einzelnen Ausgaben durch die jeweils ausgewählten Anschlusselemente die gesamte Ausgabe der räumlichen Angabe in der Form eines Musters wie einer Leuchtkette zusammengesetzt wird. Das Muster bzw. die Leuchtkette zeigt dem Benutzer einen Weg zu einem gesuchten Gerät, insbesondere Anschlusselement oder Komponente, an der über die räumliche Angabe angegebenen räumlichen Position in der Anlage.

Mit anderen Worten kann die Ausgabe der räumlichen Angabe zur Navigation zu dem gesuchten Gerät dienen. Wenn das Muster als eine Leuchtkette ausgeführt ist, können die Leuchtmittel, insbesondere LEDs, der Anschlusselemente aufleuchten und auf diese Weise eine Kette bilden, die den Weg zu einem gesuchten Gerät aufzeigt. Hierzu können die Leuchtmittel derjenigen Anschlusselemente aktiviert werden, die auf dem Weg zum gesuchten Anschlusselement angeordnet sind. Das Aufleuchten kann dabei gleichzeitig oder gemäß einer vorgegebenen Abfolge oder dynamisch in Abhängigkeit von einer aktuellen Position des Benutzers erfolgen, insbesondere aber synchronisiert durchgeführt werden. Bspw. können solche der ausgewählten Anschlusselemente für die Ausgabe dynamisch aktiviert werden, die in der Nähe des Benutzers angeordnet sind, und wieder deaktiviert werden, wenn sich der Benutzer von den Anschlusselementen entfernt. Auch kann ein Leuchtmuster bei der Ausgabe gemäß dem Signalisierungsschema vorgesehen sein, wie ein regelmäßiges, wiederholtes Aufblinken der Leuchtmittel.

Es ist ebenfalls möglich, dass die Ausgabemittel zumindest teilweise akustische Ausgabemittel wie Lautsprecher umfassen. Entsprechend kann die Ausgabe - zusätzlich oder alternativ zu einer visuellen Ausgabe - auch eine akustische Ausgabe umfassen. Auch hier ist es denkbar, dass das Signalisierungsschema die Auswahl der Anschlusselemente derart spezifiziert, dass aus den einzelnen akustischen und/oder visuellen Ausgaben durch die jeweils ausgewählten Anschlusselemente die gesamte Ausgabe der räumlichen Angabe in der Form eines Musters ergibt. Dies kann bspw. eine in Richtung der räumliche Angabe/ der räumlichen Position verlaufendes Geräusch sein, bevorzugt synchron mit einer diesbezüglichen visuellen Ausgabe.

Vorzugsweise kann vorgesehen sein, dass die Ausgabe durch die jeweils ausgewählten Anschlusselemente jeweils in der Form einer visuellen Ausgabe, insbesondere durch ein Leuchtmittel des jeweiligen Anschlusselements, initiiert wird. Dies kann dazu dienen, um die Ausgabe der räumlichen Angabe in der Form einer räumlichen Visualisierung der dadurch angegebenen räumlichen Position in der Anlage zu ermöglichen. Die Leuchtmittel sind dazu bspw. als LEDs ausgebildet, um eine effiziente und energiesparende Signalisierung zu ermöglichen.

Ein weiterer Vorteil im Rahmen der Erfindung ist erzielbar, wenn das Signalisierungsschema die Auswahl der Anschlusselemente derart spezifiziert, dass durch die Ausgaben durch die ausgewählten Anschlusselemente eine Handlungsinformation, vorzugsweise eine Installationsinformation (z. B. welches Gerät soll installiert werden?) und/oder eine Wartungsinformation (z. B. welches Gerät muss gewartet werden?) und/oder eine Austauschinformation (z. B. welches Gerät soll ausgetauscht werden?) und/oder eine Fehlerinformation (z. B. welches Gerät ist fehlerhaft) ausgegeben wird. Diese kann dazu dienen, um die räumliche Position in der Anlage als Installationsort für eine der Komponenten, insbesondere für einen Aktor oder Sensor oder Motor, und/oder ein Anschlusselement und/oder für ein Verbindungsmittel, insbesondere für ein Kabel oder einen Steckverbinder, bei einer Installation und/oder Wartung der Anlage für den Benutzer anzugeben. Mit anderen Worten können die Anschlusselemente auch dazu genutzt werden, um eine Handlungs- und/oder Installationsinformation auszugeben. Die räumliche Angabe kann dabei Teil der Handlungs- und/oder Installationsinformation sein.

In einer weiteren Möglichkeit kann vorgesehen sein, dass das Signalisierungsschema die Auswahl der Anschlusselemente derart spezifiziert, dass durch die Ausgaben durch die ausgewählten Anschlusselemente eine Handlungs- und/oder Installationsinformation ausgegeben wird. Diese kann dazu dienen, um die räumliche Position in der Anlage als Handlungsort für eine Installation und/oder einen Austausch und/oder eine Prüfung einer der Komponenten und/oder eines Anschlusselements für den Benutzer anzugeben. Die Handlungs- und/oder Installationsinformation kann somit eine Information sein, wo sich ein bestimmtes Gerät (eine bestimmte Komponente oder Anschlusselement) befindet, konkret, wo bspw. das Gerät installiert oder ausgetauscht oder geprüft oder in der Installation vorgesehen ist. Diese Information kann bspw. über eine Installationsdokumentation wie einen digitalen Schaltplan ermittelt werden.

Die Handlungs- und/oder Installationsinformation wird vorzugsweise auf Basis einer sensorische Erfassung ermittelt. Hierzu können verschiedene Sensoren zum Einsatz kommen, wie bspw. ein Vibrations- und/oder Glasfasersensor am Verbindungsmittel, insbesondere Kabel, und/oder am Anschlusselement, insbesondere Modul. Das Verbindungsmittel und/oder das Anschlusselement kann eine Übertragungsleitung zur Übertragung von Energie und/oder Daten und/oder Signalen aufweisen, insbesondere zur Übertragung zwischen Komponenten der Anlage. Es kann ferner eine Sensorik für die sensorische Erfassung in das Verbindungsmittel und/oder das Anschlusselement und/oder in die Übertragungsleitung integriert sein, um vorzugsweise eine sensorgestützte Überwachung des Verbindungsmittels und/oder des Anschlusselements und/oder der Übertragungsleitung bereitzustellen.

Die integrierte Sensorik kann derart ausgebildet sein, dass die Übertragungsleitung als eine Lichtleiterübertragungsleitung ausgebildet ist und ein Sensorelement im Bereich der Übertragungsleitung angeordnet ist, Alternativ oder zusätzlich kann das Sensorelement selbst als Lichtleiterelement ausgebildet sein. Somit ist es möglich, die sensorische Erfassung als eine lichtleiterbasierte Erfassung bereitzustellen, Ein Lichtleiter kann dabei - als Sensorik eingesetzt - eine hohe Sensitivität und Genauigkeit bereitstellen, um bspw. Vibration und/oder Temperatur und/oder Strom und/oder Spannung und/oder Geräusche und/oder Feuchtigkeit und/oder Dehnung und/oder Biegung und/oder Länge, vorzugsweise Kabellänge, und/oder einen Druck zu messen. Auf diese Weise können bspw. Fehler und/oder Anomalien und/oder Beschädigungen an der Anlage durch die sensorische Erfassung ermittelt werden. Die Handlungs- und/oder Installationsinformation kann dann entsprechend auf eine dieser Fehler und/oder Anomalien und/oder Beschädigungen inkl. dem zugehörigen Handlungsort, also bspw. Fehlerort, hinweisen.

Darüber hinaus ist es möglich, dass auf Basis der sensorischen Erfassung auch eine Topologie der Anlage ermittelt wird, insbesondere auf Grundlage der durch die Erfassung ermittelten Kabellängen. Somit kann die sensorische Erfassung, vorzugsweise die lichtleiterbasierte Erfassung, dazu dienen, die Anordnungsspezifikation zu bestimmen.

Ein weiterer Vorteil im Rahmen der Erfindung ist erzielbar, wenn zur Ausgabe durch die jeweils ausgewählten Anschlusselemente gemäß dem ermittelten Signalisierungsschema eine synchronisierte Ansteuerung zumindest der ausgewählten Anschlusselemente und vorzugsweise auch weiterer der Anschlusselemente der Anlage initiiert wird, insbesondere in der Form eines Ein- und Ausschaltens von Leuchtmitteln der Anschlusselemente gemäß dem ermittelten Signalisierungsschema. Die Anschlusselemente können somit zur Ausgabe der Handlungs- und/oder Installationsinformation synchronisiert werden.

Ferner ist es denkbar, dass zur Ausgabe durch die jeweils ausgewählten Anschlusselemente gemäß dem ermittelten Signalisierungsschema eine sequentielle Ansteuerung der ausgewählten Anschlusselemente initiiert wird, so dass vorzugsweise die Ausgabe nur durch einen Teil der ausgewählten Anschlusselemente gleichzeitig erfolgt, und dieser Teil sich sequentiell zur Darstellung einer Animation und/oder eines Farbmusters und/oder eines Blinkmusters verändert. Dies kann eine Animation zur Folge haben, wie sie man bspw. von einem dynamischen Blinklicht eines Fahrzeuges zur Richtungsangabe kennt. Dabei kann die Animation auch eine sich wiederholende visuelle Darstellung sein, die durch das Ein- und Ausschalten Ausgabemittel der Anschlusselemente erzeugt wird. Die Frequenz und Dauer des Ein- und Ausschaltens der Ausgabemittel kann dabei bspw. durch entsprechende Parameter in im Signalisierungsschema gesteuert werden. Die Ausgabe durch die ausgewählten Anschlusselemente kann bspw. durch einen Teil der Leuchtmittel der Anschlusselemente erfolgen, insbesondere durch eine Lichtemission.

Auch ist es möglich, dass eine Ansteuerung der ausgewählten Anschlusselemente initiiert wird, wobei die Ausgabe mehrere Farben umfasst, vorzugsweise gemäß einer Farbkodierung. Dabei kann für die Ausgabe ein Farbmuster verwendet werden, bei welchem bspw. eine RGB-Farbpalette durch die Ausgabemittel ausgegeben werden kann. Hierbei kann bspw. eine grüne, gelbe und rote Farbausgabe verwendet werden. Die unterschiedlichen Farben können dabei auch gemäß einer Codierung ausgegeben werden, um verschiedene Zustände mitzuteilen (z. B. "rot" für einen Fehler oder dergleichen). Mit anderen Worten kann die Ausgabe auch eine farbkodierte Ausgabe umfassen.

Es kann im Rahmen der Erfindung vorgesehen sein, dass, insbesondere bei einer Installation und/oder Wartung und/oder Prüfung und/oder Modernisierung und/oder Inbetriebnahme und/oder im Betrieb der Anlage, die nachfolgenden weiteren Schritte vorgesehen sind:
- Bereitstellen einer Kennzeichnung zur Identifikation einer der Komponenten oder Anschlusselemente, wobei vorzugsweise die Kennzeichnung aus einer Erfassung eines Identifikationsmittels an der Komponente oder dem Anschlusselement und/oder aus einer Benutzereingabe resultiert,
- Auswerten der bereitgestellten Kennzeichnung auf Basis einer Installationsdokumentation für die Anlage, insbesondere eines digitalen Schaltplans und/oder eines räumlichen und/oder mechanischen Plans der Anlage,
- Durchführen der Spezifikation der räumlichen Angabe auf Basis der Auswertung, wobei vorzugsweise die räumliche Position in der Anlage als Ort der Komponente oder des Anschlusselements und/oder als Ort zur Installation und/oder Wartung und/oder Prüfung und/oder Modernisierung und/oder Inbetriebnahme und/oder im Betrieb der Komponente bzw. des Anschlusselements oder mittels der Komponente bzw. des Anschlusselements, insbesondere auch zum Austausch mit der Komponente oder des Anschlusselements, angegeben wird.

Daher kann die Ausgabe der räumlichen Angabe im Zusammenhang mit dem Einscannen oder Eingeben einer Kennzeichnung erfolgen, wodurch die Kennzeichnung das gesuchte Gerät definieren kann. Die Kennzeichnung kann daher z. B. aus dem Einscannen eines QR-Codes oder eines Betriebsmittelkennzeichnens (BMKs) oder aus dem Anklicken einer Darstellung eines Geräts der Anlage auf einem Touchscreen oder im Schaltplan oder aus einer Fotografie des Geräts resultieren. Anhand der Kennzeichnung kann dann bspw. der Ort des Geräts z. B. durch die Leuchtkette ausgegeben werden oder der Ort der Installations- oder Wartungshandlung mit diesem Gerät. Das Gerät kann neben einem Anschlusselement oder einer Komponente bspw. auch ein Prüfgerät sein, mit welchen eine Prüfung an der anzugebenen Position durchgeführt werden soll.

Ferner kann es im Rahmen der Erfindung vorgesehen sein, dass das jeweilige Anschlusselement sich bei einem Standardbetrieb der Anlage in einem Standardbetriebsmodus befindet, und bei einem Installations- und/oder Wartungs- (d. h. auch Prüf-) betrieb der Anlage in einen Ortungsmodus überführt wird. Dabei können ein oder mehrere Leuchtmittel des Anschlusselements einem jeweiligen Anschluss, insbesondere Port, des Anschlusselements zugeordnet sein. Dabei kann der Anschluss bzw. Port als Anschlussfunktion, insbesondere Portfunktion, eine Signal- und/oder Datenübertragung, vorzugsweise zur Ansteuerung und/oder Auswertung von Komponenten (wie Aktoren oder Sensoren) der Anlage, bereitstellen. Es ist möglich, dass die Ausgabe durch das eine oder die mehreren Leuchtmittel im Standardbetriebsmodus in Abhängigkeit von der Anschlussfunktion und im Ortungsmodus in Abhängigkeit von dem ermittelten Signalisierungsschema synchronisiert mit den weiteren Anschlusselementen durchgeführt wird. Dies ermöglicht es, die bereits vorhandenen Leuchtmittel außerhalb des Standardbetriebsmodus für die Ortung zu nutzen und somit den technischen Aufwand bei den Anschlusselementen zu reduzieren.

Der jeweilige Anschluss kann bspw. als ein Port ausgebildet sein, vorzugsweise mit einer vorgegebenen Kodierung für einen Steckverbinder, alternativ aber auch als eine Klemme oder dergleichen. Das Anschlusselement kann als ein Modul, insbesondere ein Feldbusmodul, oder ein Klemmkasten oder dergleichen ausgebildet sein.

Optional kann es vorgesehen sein, dass das jeweilige Anschlusselement eine Mehrzahl von Leuchtmitteln, vorzugsweise LEDs, aufweist, welche jeweils einem Anschluss, vorzugsweise Port, des Anschlusselements zugeordnet sind und einen Betriebszustands des jeweiligen Anschlusses bzw. Ports anzeigen. Dabei kann die Anzeige des Betriebszustands in Abhängigkeit von dem ermittelten Signalisierungsschema überbrückt werden. Dies ermöglicht es, dass die Anzeige (kurzzeitig) verwendet wird, um die räumliche Position für den Benutzer erkennbar zu machen, und insbesondere eine Richtungsangabe mit der Richtung zur räumlichen Position relativ zum Anschlusselement und/oder einen Weg anzuzeigen. Dies hat den Vorteil, dass die bereits vorhandenen Leuchtmittel außerhalb eines Standardbetriebsmodus für die Ortung genutzt und somit der technische Aufwand bei den Anschlusselementen reduziert werden kann.

Ein weiterer Vorteil im Rahmen der Erfindung ist erzielbar, wenn die Anordnungsspezifikation zumindest eine der folgenden Informationen aufweist, welche zur Ermittlung des Signalisierungsschemas genutzt werden:
- Eine absolute Positionsinformation mit einer absoluten Position (in Bezug auf die Anlage) der Anschlusselemente (in der Anlage),
- Eine relative Positionsinformation mit einer relativen Position der Anschlusselemente zueinander,
- Eine Ausrichtungsinformation mit einer Angabe der Ausrichtung der Anschlusselemente.

Dabei kann die Anordnungsspezifikation bei einer Installation der Anlage erfasst werden, vorzugsweise durch eine Benutzereingabe und/oder durch eine sensorische Erfassung der oder durch die Anschlusselemente und/oder durch eine automatisierte Auswertung einer Installationsdokumentation.

Ebenfalls Gegenstand der Erfindung ist ein System zur Ausgabe einer räumlichen Angabe bei einer industriellen Anlage, insbesondere einer elektrischen Maschine oder einer industriellen Automatisierungsanlage, bei welcher eine Verbindung, vorzugsweise dezentrale Verschaltung, von Komponenten der Anlage durch mehrere Anschlusselemente, insbesondere im Feld, vorgesehen ist.

Das System kann eine, insbesondere erfindungsgemäße, Vorrichtung zum Spezifizieren der räumlichen Angabe umfassen. Diese Angabe kann für einen Benutzer ausgegeben werden, um eine räumliche Position in der Anlage anzugeben.

Die Vorrichtung kann eine, insbesondere erfindungsgemäße, Vorrichtung zur Datenverarbeitung, wie einen Computer, umfassen.

Weiter kann die Vorrichtung zum Bereitstellen einer Anordnungsspezifikation der Anschlusselemente dienen, welche für eine räumliche Anordnung der Anschlusselemente in der Anlage spezifisch ist.

Weiter kann die Vorrichtung zum Ermitteln eines Signalisierungsschemas auf Basis der spezifizierten räumlichen Angabe und der bereitgestellten Anordnungsspezifikation ausgeführt sein, wobei unter Berücksichtigung der räumlichen Anordnung der Anschlusselemente eine Auswahl der Anschlusselemente durch das Signalisierungsschema spezifizierbar ist, die geeignet ist, um durch eine Ausgabe durch die jeweils ausgewählten Anschlusselemente die räumliche Position für den Benutzer erkennbar zu machen.

Damit bringt das erfindungsgemäße System die gleichen Vorteile mit sich, wie sie ausführlich mit Bezug auf ein erfindungsgemäßes Verfahren beschrieben worden sind. Zudem kann das System dazu ausgebildet sein, das erfindungsgemäße Verfahren auszuführen. Es können weiter die Anschlusselemente zur Ausgabe gemäß dem ermittelten Signalisierungsschema bei dem System vorgesehen sein.

Ferner kann es im Rahmen der Erfindung vorgesehen sein, dass das System aufweist:
- wenigstens eine Steuereinrichtung, welche dezentral oder zentral in der Anlage angeordnet ist/sind, und/oder über Verbindungsmittel, insbesondere Kabel, bevorzugt Feldbuskabel, mit den Anschlusselementen zum Signal- und/oder Datenaustausch verbunden ist/sind, und/oder
- ein oder mehrere Komponenten, die mit den Anschlusselementen verbunden sind, um auf Basis des Signal- und/oder Datenaustausches eine Funktion der Anlage bereitzustellen.

Die Steuereinrichtung ist bspw. als eine zentrale Steuereinrichtung wie eine Speicherprogrammierbare Steuerung ausgebildet. Die Steuereinrichtung und/oder die erfindungsgemäße Vorrichtung kann vorzugsweise dazu verwendet werden, um die Anschlusselemente gemäß dem Signalisierungsschema anzusteuern und somit die Ausgabe zu initiieren.

Des Weiteren ist es denkbar, dass das jeweilige Anschlusselement aufweist:
- zumindest ein oder mehrere Ausgabemittel, vorzugsweise jeweils in der Form eines Leuchtmittels, um darüber die Ausgabe vorzunehmen,
- mehrere Anschlüsse, vorzugsweise Ports, jeweils zur Bereitstellung einer Signal- und/oder Datenübertragung mit wenigstens einer der Komponenten.

Weiter können jedem der Anschlüsse bzw. Ports mindestens ein oder mindestens zwei der Ausgabemittel räumlich zugeordnet sein. Bspw. können jeweils die Ausgabemittel beidseits des Anschlusses/Ports angeordnet sein, bevorzugt versenkt im Gehäuse. Es kann jeweils ein Streu- und/oder Linsenelement wie ein Diffusor über dem oder den zugeordneten Ausgabemitteln angeordnet sein, um die Ausgabe in der Form einer Lichtemission zu streuen und zu verteilen. Dabei kann das jeweilige Streu- und/oder Linsenelement ringförmig ausgebildet sein und vorzugsweise derart am Gehäuse angebracht sein, dass sich eines der Anschlüsse/Ports im Mittelpunkt des Rings befindet.

Es kann das Ausgabemittel jeweils, oder jeweils mehrere der Ausgabemittel, einem oder mehreren Anschlüssen, insbesondere Port(s), des Anschlusselements räumlich zugeordnet sein, um bspw. einen Betriebszustand des Anschlusses bzw. Ports und/oder einen Anschluss eines Verbindungsmittels am Anschluss/Port und/oder einen Signalaustausch am Anschluss/Port und/oder eine Installationshandlung für den Anschluss/Port zu signalisieren.

Außerdem kann das eine oder können mehrere der Ausgabemittel zumindest teilweise an einer Kante eines Gehäuses des Anschlusselements angeordnet sein, vorzugsweise an einer Ecke und/oder an einem Rand des Gehäuses.

Weiter kann das jeweilige Ausgabemittel und der jeweilige Anschluss, insbesondere Port, vorzugsweise in einem gemeinsamen Gehäuse angeordnet sein. Das Ausgabemittel kann bspw. im Gehäuse versenkt angeordnet sein. Es kann auch eine Mehrzahl von Anschlüssen/Ports und Ausgabemittel pro Anschlusselement vorgesehen sein. Jedem Anschluss/Port können bspw. zwei oder drei oder mehr Ausgabemittel zugeordnet sein. Weiter kann eine Mehrzahl von Ausgabemitteln pro Anschluss/Port vorgesehen sein.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
- Fig. 1: eine perspektivische Darstellung eines Anschlusselements sowie eine schematische Darstellung eines Systems gemäß Ausführungsvarianten der Erfindung.
- Fig. 2: eine schematische Darstellung einer Anlage.
- Fig. 3: eine schematische Visualisierung eines Verfahrens gemäß Ausführungsvarianten der Erfindung.
- Fig. 4: Eine beispielhafte Detailsansicht eines Anschlusselements.

In den nachfolgenden Figuren werden für die gleichen technischen Merkmale auch von unterschiedlichen Ausführungsbeispielen die identischen Bezugszeichen verwendet.

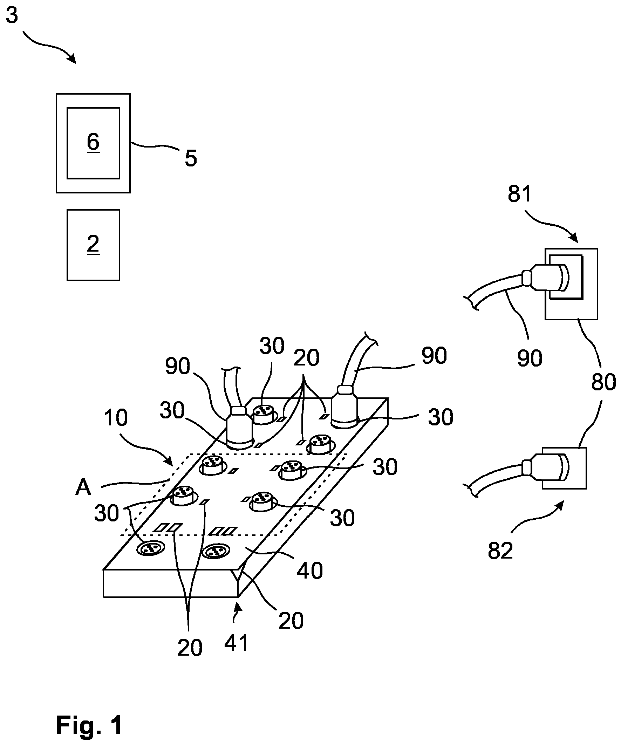

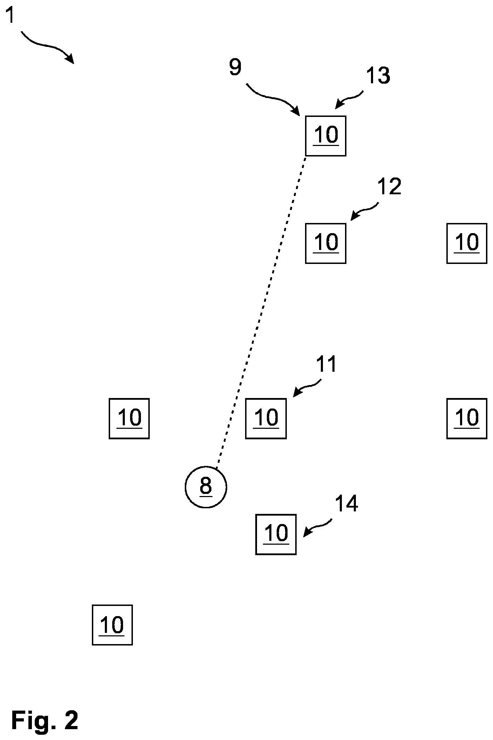

In Fig. 1 sind Teile eines System 3 dargestellt, welches zur Ausgabe einer räumlichen Angabe bei einer industriellen Anlage 1 dient. Die Anlage 1, welche in Fig. 2 schematisch dargestellt wird, kann bspw. als eine elektrische Maschine oder eine industrielle Automatisierungsanlage ausgeführt sein. Dabei kann die Anlage 1 gekennzeichnet sein durch eine Verbindung von Komponenten 80 der Anlage 1 durch mehrere Anschlusselemente 10.

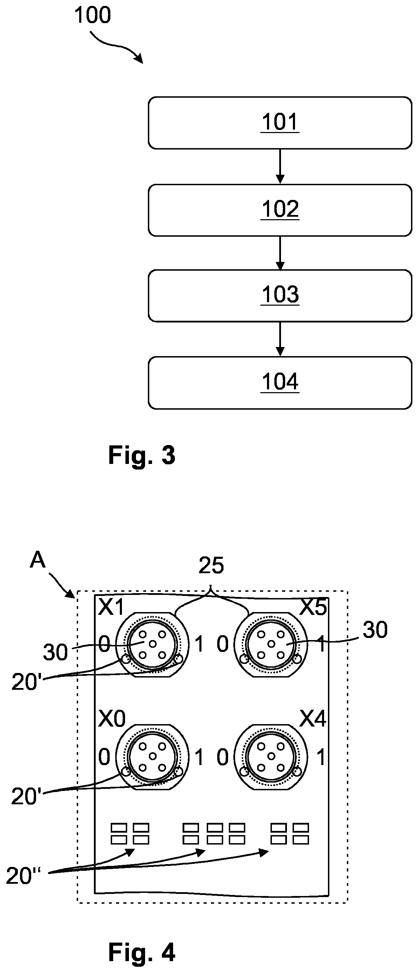

Das System 3 kann eine Vorrichtung 5 mit einem Computerprogramm 6 aufweisen, welches die Verfahrensschritte 101-104 eines in Fig. 3 visualisierten Verfahrens 100 ausführt.

Konkret kann auf diese Weise ein Spezifizieren 101 der räumlichen Angabe erfolgen, welche für einen Benutzer ausgegeben werden soll, um eine räumliche Position in der Anlage 1 anzugeben. In Fig. 2 ist die räumliche Position als gesuchte Position 9 angegeben, welche in diesem Beispiel dem Ort eines dritten Anschlusselements 13 zugeordnet ist. Weiter ist in Fig. 2 der aktuelle Ort des Benutzers 8 angegeben, welcher sich in der Nähe zu einem ersten Anschlusselement 11 und vierten Anschlusselement 14 befindet. Es ist weiterhin eine Strecke (mit gestrichelter Linie) dargestellt, welche die kürzeste Route (Weg oder Luftlinie) zwischen dem aktuellen Ort des Benutzers 8 und der gesuchten Position 9 angibt.

Anschließend kann ein Bereitstellen 102 wie ein digitales Auslesen einer Anordnungsspezifikation der Anschlusselemente 10 erfolgen. Durch die Anordnungsspezifikation kann eine räumliche Anordnung der Anschlusselemente 10 in der Anlage 1 spezifiziert sein. Dies können bspw. die räumlichen Koordinaten der Anschlusselemente 10 in der in Fig. 2 gezeigten Anordnung sein. Daraus lassen sich entsprechend Rückschlüsse ziehen, z. B. welche der Anschlusselemente 10 der vorgenannten Strecke am nächsten sind. Die Anschlusselemente 10, welche im gezeigten Beispiel der Strecke am nächsten sind, umfassen in Fig. 2 neben dem ersten und dritten bspw. auch noch ein zweites Anschlusselement 12.

Anschließend kann ein Signalisierungsschema auf Basis der spezifizierten räumlichen Angabe und der bereitgestellten Anordnungsspezifikation ermittelt werden. Unter Berücksichtigung der räumlichen Anordnung der Anschlusselemente 10 kann dabei eine Auswahl der Anschlusselemente 10 durch das Signalisierungsschema spezifizierbar sein, die geeignet ist, um durch eine Ausgabe durch die jeweils ausgewählten Anschlusselemente 10 die räumliche Position für den Benutzer erkennbar zu machen. Hierzu wird bspw. die genannte Strecke berechnet und bestimmt, welche der Anschlusselemente 10 dieser Strecke am nächsten sind. Im vorliegenden Beispiel werden entsprechend die Anschlusselemente 11, 12 und 13 ausgewählt, jedoch bspw. nicht das Anschlusselement 14 oder die weiteren in Fig. 2 dargestellten Anschlusselemente 10. Die Anschlusselemente 10 können dann zur Ausgabe gemäß dem ermittelten Signalisierungsschema angesteuert werden. Das heißt bspw., dass bei den ausgewählten Anschlusselementen 10 die Ausgabe gemäß dem Signalisierungsschema initiiert wird, z. B. durch ein Aufleuchten von in Fig. 1 dargestellten Leuchtmitteln 20. Die nicht ausgewählten Anschlusselemente 10 können hingegen so angesteuert werden, dass die Leuchtmittel 20 deaktiviert werden. Ebenfalls ist es denkbar, dass die nicht ausgewählten Anschlusselemente 10 nicht speziell angesteuert werden und somit im Standardbetriebsmodus verbleiben. Die Ansteuerung kann bspw. über eine Steuereinrichtung 2 oder einen Computer 10 durchgeführt werden, z. B. mittels einer Kabel- oder Funkverbindung mit den Anschlusselementen 10.

Das in Fig. 1 dargestellte System 3 kann ferner wenigstens eine Steuereinrichtung 2 umfassen, welche dezentral oder zentral in der Anlage 1 angeordnet ist, und über Verbindungsmittel 90, insbesondere Kabel, bevorzugt Feldbuskabel, mit den Anschlusselementen 10 zum Signal- und/oder Datenaustausch verbunden zu werden. Weiter können ein oder mehrere Komponenten 80 vorgesehen sein, die mit den Anschlusselementen 10 verbunden sind, um auf Basis des Signal- und/oder Datenaustausches eine Funktion der Anlage 1 bereitzustellen.

Das jeweilige Anschlusselement 10 kann zumindest ein Ausgabemittel 20, vorzugsweise Leuchtmittel 20, aufweisen, um darüber die Ausgabe vorzunehmen. Dabei kann das Ausgabemittel 20 jeweils einem oder mehreren Anschlüssen 30, insbesondere Port(s) 30, des Anschlusselements 10 räumlich zugeordnet sein, um einen Betriebszustand des/der Anschlüsse/Ports 30 und/oder einen Anschluss eines Verbindungsmittels 90 am Anschluss/Port 30 zu signalisieren. Das jeweilige Ausgabemittel 20 und der jeweilige Anschluss/Port 30 können in einem gemeinsamen Gehäuse 40 angeordnet sein. Ferner ist es möglich, dass zumindest eines der Ausgabemittel 20 an einer Kante 41 des Gehäuses 40 angeordnet ist, bevorzugt in einem winkligen Bereich und/oder Eckbereich des Gehäuses 40.

Aus Fig. 2 ist ersichtlich, dass das Signalisierungsschema die Auswahl der Anschlusselemente 10 derart spezifiziert kann, dass aus den einzelnen Ausgaben durch die jeweils ausgewählten Anschlusselemente 10 die gesamte Ausgabe der räumlichen Angabe zusammengesetzt wird. Wenn bspw. die Leuchtmittel 20 des ersten, zweiten und dritten Anschlusselements 11,12,13 aktiviert werden, wird die Ausgabe in der Form eines Musters - konkret einer Leuchtkette - erzeugt, die dem Benutzer den Weg zur gesuchten Position 9 bzw. dem gesuchten Anschlusselement 13 an der über die räumliche Angabe angegebenen räumlichen Position 9 in der Anlage 1 zeigt. Entsprechend kann die Ausgabe durch die jeweils ausgewählten Anschlusselemente 10 jeweils in der Form einer visuellen Ausgabe initiiert werden, um die Ausgabe der räumlichen Angabe in der Form einer räumlichen Visualisierung der dadurch angegebenen räumlichen Position in der Anlage 1 zu ermöglichen.

Das Signalisierungsschema kann die Auswahl der Anschlusselemente 10 derart spezifiziert, dass durch die Ausgaben durch die ausgewählten Anschlusselemente 10 eine Handlungsinformation, vorzugsweise Installationsinformation und/oder dergleichen, ausgegeben wird, um die räumliche Position in der Anlage 1 als Installationsort 9 für eine der Komponenten 80, insbesondere für einen Aktor 81 oder Sensor 82 oder dergleichen, und/oder ein Anschlusselement 10 und/oder für ein Verbindungsmittel 90, insbesondere für ein Kabel oder einen Steckverbinder, bei einer Installation und/oder Wartung der Anlage für den Benutzer anzugeben.

Fig. 3 veranschaulicht gemäß Ausführungsbeispielen der Erfindung ein Verfahren 100 zur Ausgabe einer räumlichen Angabe bei einer industriellen Anlage 1, insbesondere einer elektrischen Maschine oder einer industriellen Automatisierungsanlage, bei welcher eine Verbindung von Komponenten 80 der Anlage 1 durch mehrere Anschlusselemente 10 vorgesehen ist. Gemäß einem ersten Verfahrensschritt 101 ist vorgesehen, dass eine räumliche Angabe spezifiziert wird, welche für einen Benutzer ausgegeben werden soll, um eine räumliche Position in der Anlage 1 anzugeben. Gemäß einem zweiten Verfahrensschritt 102 ist vorgesehen, dass eine Anordnungsspezifikation der Anschlusselemente 10 bereitgestellt wird, welche für eine räumliche Anordnung der Anschlusselemente 10 in der Anlage 1 spezifisch ist. Gemäß einem dritten Verfahrensschritt 103 erfolgt ein Ermitteln eines Signalisierungsschemas auf Basis der spezifizierten räumlichen Angabe und der bereitgestellten Anordnungsspezifikation. Dabei wird unter Berücksichtigung der räumlichen Anordnung der Anschlusselemente 10 eine Auswahl der Anschlusselemente 10 durch das Signalisierungsschema spezifiziert. Diese Spezifizierung erfolgt insbesondere automatisiert in der Weise, dass sie geeignet ist, um durch eine Ausgabe durch die jeweils ausgewählten Anschlusselemente 10 die räumliche Position für den Benutzer erkennbar zu machen. Mit anderen Worten kann die Auswahl der Anschlusselemente 10, welche durch das Signalisierungsschema spezifiziert wird, derart erfolgen, dass bei einer Ausgabe durch die jeweils ausgewählten Anschlusselemente 10 die räumliche Position für den Benutzer erkennbar wird. Dies ermöglicht es gemäß einem vierten Verfahrensschritt 104, durch ein Initiieren der Ausgabe durch die jeweils ausgewählten Anschlusselemente 10 gemäß dem ermittelten Signalisierungsschema die Ausgabe der räumlichen Angabe vorzunehmen..

Gemäß einer Ausführungsvariante können die in Fig. 1 und 2 dargestellten Anschlusselemente 10, insbesondere Module 10, als Feldbusmodule, und insbesondere zumindest teilweise als IO-Link-Module 10, ausgebildet sein. An den Anschlusselementen 10 können Komponenten 80 wie Aktoren 81 oder Sensoren 82 an entsprechende Anschlüsse 30 bzw. Ports 30 des Anschlusselements 10 angeschlossen sein. Dabei können im Falle eines IO-Link-Moduls 10 die Komponenten 80 als IO-Link-fähige Geräte ausgebildet sein.

Je nach Anwendungszweck können die Anschlusselemente 10 gegen äußere Einflüsse geschützt sein und z. B. gemäß einer Schutzart IP67 ausgebildet sein und/oder staubgeschützt und/oder wassergeschützt und/oder vibrationsgeschützt ausgebildet sein. Dies ermöglicht es, die Anschlusselemente 10 dezentral im Feld einzusetzen und daher einen zentralen Schaltschrank zumindest teilweise zu ersetzen.

Ferner können die Anschlusselemente 10 als Master-Anschlusselemente ausgebildet sein, und daher in der Lage sein, mit weiteren Anschlusselementen wie Hubs, Analog-Konvertern oder Slave-Anschlusselementen verbunden zu werden. Die Anschlusselemente 10 können neben den reinen Prozessdaten (I/Os) auch sekundär erweiterte Diagnosedaten (Spannungs-, Strom- und Temperaturwerte) zu den jeweiligen Anschlüssen30/Ports 30 und dem gesamten Anschlusselement 10 liefern. Dadurch können Anomalien erkannt und über die Datenanalyse der eigentliche Prozess optimiert werden. Dabei weisen die Anschlusselemente 10 ggf. Ausgabemittel 20, vorzugsweise Leuchtmittel 20 wie LEDs, auf, um einen Betriebszustand am jeweiligen Anschluss 30/Port 30 anzugeben. Diese Ausgabemittel können gemäß Ausführungsbeispielen der Erfindung für die Darstellung der Handlungs- und/oder Installationsinformation z. B. zur Ortung von Komponenten 80 genutzt werden.

Gemäß einem weiteren Ausführungsbeispiel der Erfindung kann ein System 3 für die elektrische Installationstechnik vorgesehen sein. Es können bspw. bei der Installation der Anlage 1 Identifikationsmittel, wie maschinenlesbare Codes auf den Steckverbindern, erfasst/gescannt werden, um die in einem Schaltplan vorgesehenen Anschlusspunkte (z. B. Steckpunkte) zu identifizieren. Durch die Ausgabe einer Handlungs- und/oder Installationsinformation kann der vorgesehene Anschlusspunkt in der Anlage 1 angegeben werden. Es können hierzu zusätzlich zu der Ausgabe der räumliche Angabe auch ein Touchdisplay die vorgesehenen Verbindungen zwischen den jeweiligen Anschlusspunkten im digitalen Schaltplan und dem 3D-Modell der Anlage 1 anzeigen. Auch können - zusätzlich zur der Ausgabe der räumlichen Angabe - Leuchtmittel 20 wie Leuchtdioden an den entsprechenden Feldbusmodulen den für den jeweiligen Steckvorgang zugewiesenen Anschluss 30/Port 30 ausweisen. In diesen Fällen wird die Ausgabe der räumlichen Angabe ergänzend genutzt, um auch durch die Ausgabe von weiteren Anschlusselementen 10 zur Darstellung dieser Handlungs- und/oder Installationsinformation beizutragen. Dies geschieht bspw. durch die Anzeige des Wegs zum Feldbusmodul mit dem zugewiesenen Anschluss 30 / Port 30.

In Fig. 4 ist der in Fig. 1 markierte Bereich A in einer beispielhaften Ausführung näher dargestellt. Dabei ist erkennbar, dass die Leuchtmittel 20 entsprechend ihrer Funktion unterschiedlich angeordnet sein können. In dem gezeigten Beispiel sind mehrere Leuchtmittel 20" matrixartig angeordnet, um einen Überblick über allgemeine Funktionen des Anschlusselements 10 zu bieten. Hierzu signalisieren die Leuchtmittel 20" z. B. eine Aktivität der Feldbuskommunikation des Anschlusselements 10 und/oder eine vorhandene Energieversorgung. Alternativ oder zusätzlich können Leuchtmittel 20' den Anschlüssen 30 bzw. Ports 30 des Anschlusselements 10 zugeordnet sein.

Allgemein können jedem Anschluss 30 / Port 30 ein, zwei oder mehrere Leuchtmittel 20' zugeordnet sein, im in Fig. 4 dargestellten Beispiel sind es zwei Leuchtmittel 20' pro Anschluss 30 bzw. Port 30. Um die Sichtbarkeit der Lichtemission der Leuchtmittel 20' zu verbessern, können Streu- und/oder Linsenelemente 25, wie optische Linsen und/oder optische Diffusoren, vor den Leuchtmitteln 20' angebracht sein. Ein Diffusor ist dabei insbesondere ein optisches Element, das dazu verwendet wird, das Licht zu streuen und zu verteilen, um eine gleichmäßige und weiche Beleuchtung zu erzeugen. Auf diese Weise kann die Erkennbarkeit der Ausgabe bei einem Einschalten der Leuchtmittel 20' verbessert werden.

Es kann jedem der Anschlüsse 30, insbesondere Ports 30, ein Streu- und/oder Linsenelement 25 zugeordnet sein. Hierzu kann sich das jeweilige Streu- und/oder Linsenelement 25 um den jeweiligen Anschluss 30 erststrecken und hierzu z. B. ringförmig ausgebildet sein. Mit anderen Worten kann um den jeweiligen Anschluss 30, welchem auch wenigstens ein Leuchtmittel 20' zugeordnet ist, ein ringförmiges Streu- und/oder Linsenelement 25 angeordnet sein - mit dem Anschluss 30 vorzugsweise im Mittelpunkt des Streu- und/oder Linsenelements 25. Vorzugsweise können die Streu- und/oder Linsenelemente 25 über den im Gehäuse 40 versenkten Leuchtmitteln 20' angebracht sein.

Gemäß einem weiteren Ausführungsbeispiel der Erfindung kann nach einer Installationshandlung wie dem fachgerechten Stecken des Steckverbinders die korrekte Verbindung durch einen Benutzer z. B. auf dem Touchdisplay bestätigt werden, um eine automatische Dokumentation auszulösen. Bei Bedarf können Änderungen digital kommentiert werden, um die Kommentierung bei der Konstruktion zu verwenden. Das System 3 kann alle relevanten Informationen und Änderungen zentral speichern, um maximale Team-Effizienz und Transparenz zu ermöglichen.

Gemäß einem weiteren Ausführungsbeispiel der Erfindung kann das System 3 durch maschinenspezifische, visuelle und geführte Schritt-für-Schritt-Anleitungen die Installation unterstützen und Installationsfehler vermeiden. Es ermöglicht dabei ggf. auch den Import von CAD-Dateien, Topologie und Schaltplan in diverse Darstellungsformate.

Außerdem ist es denkbar, dass einzelne Montageschritte visualisieren werden können. Die Visualisierung und/oder die Darstellung der Handlungs- und/oder Installationsinformation kann auf Endgeräten wie Tablet, Laptop, PC und mobilen Endgeräten erfolgen. Eine weitere Möglichkeit ist die Darstellung über die ausgegebene räumliche Angabe.

Gemäß einem weiteren Ausführungsbeispiel der Erfindung können Schritt-für-Schritt-Visualisierungen vorgesehen sein, die den Anwendenden eine Visualisierung des aktuellen Montageschritts zur Vereinfachung der Installation bieten. Zum Beispiel kann nach der Identifizierung eines Steckverbinders die komplementäre Montageanleitung angezeigt werden, wodurch Verwechslungen und Flüchtigkeitsfehler vermieden werden.

Ferner kann ggf. eine eindeutige Identifikation der Geräte bzw. Komponenten 80 durch Identifikationsmittel in der Form von maschinenlesbaren Codes erfolgen. Diese Codes ermöglichen eine eindeutige Identifikation mithilfe eines mobilen Endgeräts wie einem Scanner oder Smartphone. Im Rahmen der Erfindung können diese Identifikationsmittel zur Bereitstellung von Kennzeichnungen der Geräte verwendet werden.

Gemäß einem weiteren Ausführungsbeispiel der Erfindung können Checklisten für Montagepläne in einer Applikation integriert sein. Der gesamte Montageprozess kann auf diese Weise übersichtlich aufgearbeitet werden, sodass der Arbeitsfortschritt in Echtzeit eingesehen und die Montage sequenziell abgearbeitet werden kann.

Gemäß einem weiteren Ausführungsbeispiel der Erfindung kann eine digitale Dokumentation vorgesehen sein. Änderungen können direkt im System 3 eingetragen, freigegeben und im Maschinenplan einer Installationsdokumentation abgelegt werden.

Gemäß einem weiteren Ausführungsbeispiel der Erfindung können diverse Darstellungsformate unterstützt werden. Bspw. können zur Bereitstellung einer Installationsdokumentation CAD-Dateien, Topologie und Schaltplan importiert werden, sodass die Beteiligten flexibel zwischen den Darstellungsformen wechseln und den Gesamtprozess überblicken können.

Ausführungsbeispiele der Erfindung können bevorzugt in der Automatisierungstechnik Anwendung finden, um die Effizienz der elektrischen Installationstechnik von der Planung bis zur Instandhaltung zu optimieren.

Die voranstehende Erläuterung der Ausführungsformen beschreibt die vorliegende Erfindung ausschließlich im Rahmen von Beispielen.

### Bezugszeichenliste

- 1: Anlage
- 2: Steuereinrichtung
- 3: System
- 5: Vorrichtung
- 6: Computerprogramm
- 8: Ort des Benutzers
- 9: gesuchte Position

- 10: Anschlusselement
- 11: erstes Anschlusselement
- 12: zweites Anschlusselement
- 13: drittes Anschlusselement
- 14: weiteres Anschlusselement

- 20: Leuchtmittel
- 25: Diffusor

- 30: Anschluss, Port

- 40: Gehäuse
- 41: Gehäusekante

- 80: Komponente
- 81: erste Komponente, Aktor
- 82: zweite Komponente, Sensor

- 90: Verbindungsmittel

- 100: Verfahren

## Patentansprüche

1. Verfahren (100) zur Ausgabe einer räumlichen Angabe bei einer industriellen Anlage (1), insbesondere einer elektrischen Maschine oder einer industriellen Automatisierungsanlage, bei welcher eine Verbindung von Komponenten (80) der Anlage (1) im Feld durch mehrere Anschlusselemente (10), insbesondere Module (10), welche eine Automatisierungs- und/oder Verteilungsfunktion in der Anlage (1) haben, vorgesehen ist, umfassend die nachfolgenden Schritte:
- Spezifizieren (101) der räumlichen Angabe, welche für einen Benutzer ausgegeben werden soll, um eine räumliche Position in der Anlage (1) anzugeben,
- Bereitstellen (102) einer Anordnungsspezifikation der Anschlusselemente (10), welche für eine räumliche Anordnung der Anschlusselemente (10) in der Anlage (1) spezifisch ist,
- Ermitteln (103) eines Signalisierungsschemas auf Basis der spezifizierten räumlichen Angabe und der bereitgestellten Anordnungsspezifikation, wobei unter Berücksichtigung der räumlichen Anordnung der Anschlusselemente (10) eine Auswahl der Anschlusselemente (10) durch das Signalisierungsschema spezifiziert wird, die geeignet ist, um durch eine Ausgabe durch die jeweils ausgewählten Anschlusselemente (10) die räumliche Position für den Benutzer erkennbar zu machen,
- Initiieren (104) der Ausgabe durch die jeweils ausgewählten Anschlusselemente (10) gemäß dem ermittelten Signalisierungsschema,
**dadurch gekennzeichnet,**
**dass** das Signalisierungsschema die Auswahl der Anschlusselemente (10) derart spezifiziert, dass aus den einzelnen Ausgaben durch die jeweils ausgewählten Anschlusselemente (10) die gesamte Ausgabe der räumlichen Angabe zusammengesetzt wird, in der Form eines Musters wie einer Leuchtkette, die dem Benutzer einen Weg zu einem gesuchten Gerät (10,80) an der über die räumliche Angabe angegebenen räumlichen Position in der Anlage (1) zeigt.

2. Verfahren (100) nach Anspruch 1,
**dadurch gekennzeichnet,**
**dass** das gesuchte Gerät (10,80) ein Anschlusselement (10) oder eine Komponente (80) ist.

3. Verfahren (100) nach einem der vorhergehenden Ansprüche,
**dadurch gekennzeichnet,**
**dass** die Ausgabe durch die jeweils ausgewählten Anschlusselemente (10) jeweils in der Form einer visuellen Ausgabe, insbesondere durch ein Leuchtmittel (20) des jeweiligen Anschlusselements (10), initiiert wird, um die Ausgabe der räumlichen Angabe in der Form einer räumlichen Visualisierung der dadurch angegebenen räumlichen Position in der Anlage (1) zu ermöglichen.

4. Verfahren (100) nach einem der vorhergehenden Ansprüche,
**dadurch gekennzeichnet,**
**dass** das Signalisierungsschema die Auswahl der Anschlusselemente (10) derart spezifiziert, dass durch die Ausgaben durch die ausgewählten Anschlusselemente (10) eine Handlungs- und/oder Installationsinformation ausgegeben wird, um die räumliche Position in der Anlage (1) als Installationsort für eine der Komponenten (80), insbesondere für einen Aktor oder Sensor oder Motor, und/oder ein Anschlusselement (10) und/oder für ein Verbindungsmittel, insbesondere für ein Kabel oder einen Steckverbinder, bei einer Installation und/oder Wartung der Anlage für den Benutzer anzugeben.

5. Verfahren (100) nach einem der vorhergehenden Ansprüche,
**dadurch gekennzeichnet,**
**dass** das Signalisierungsschema die Auswahl der Anschlusselemente (10) derart spezifiziert, dass durch die Ausgaben durch die ausgewählten Anschlusselemente (10) eine Handlungs- und/oder Installationsinformation ausgegeben wird, um die räumliche Position in der Anlage (1) als Handlungsort für eine Installation und/oder einen Austausch und/oder eine Prüfung einer der Komponenten (80) und/oder eines Anschlusselements (10) für den Benutzer anzugeben.

6. Verfahren (100) nach einem der vorhergehenden Ansprüche,
**dadurch gekennzeichnet,**
**dass** zur Ausgabe durch die jeweils ausgewählten Anschlusselemente (10) gemäß dem ermittelten Signalisierungsschema:
- eine synchronisierte Ansteuerung zumindest der ausgewählten Anschlusselemente (10) und vorzugsweise auch weiterer der Anschlusselemente (10) der Anlage initiiert wird, insbesondere in der Form eines Ein- und Ausschaltens von Leuchtmitteln (20) der Anschlusselemente (10) gemäß dem ermittelten Signalisierungsschema, und/oder
- eine sequentielle Ansteuerung der ausgewählten Anschlusselemente (10) initiiert wird, so dass die Ausgabe nur durch einen Teil der ausgewählten Anschlusselemente (10) gleichzeitig erfolgt, und dieser Teil sich sequentiell zur Darstellung einer Animation und/oder eines Blinkmusters verändert,
- eine Ansteuerung der ausgewählten Anschlusselemente (10) initiiert wird, wobei die Ausgabe mehrere Farben umfasst, vorzugsweise gemäß einer Farbkodierung.

7. Verfahren (100) nach einem der vorhergehenden Ansprüche,
**dadurch gekennzeichnet,**
**dass**, insbesondere bei einer Installation und/oder Wartung und/oder Prüfung und/oder Modernisierung und/oder Inbetriebnahme und/oder im Betrieb der Anlage (1), die nachfolgenden weiteren Schritte vorgesehen sind:
- Bereitstellen einer Kennzeichnung zur Identifikation einer der Komponenten (80) oder Anschlusselemente (10), wobei vorzugsweise die Kennzeichnung aus einer Erfassung eines Identifikationsmittels an der Komponente (80) oder dem Anschlusselement (10) und/oder aus einer Benutzereingabe resultiert,
- Auswerten der bereitgestellten Kennzeichnung auf Basis einer Installationsdokumentation für die Anlage (1), insbesondere eines digitalen Schaltplans und/oder eines räumlichen und/oder mechanischen Plans der Anlage (1),
- Durchführen der Spezifikation (101) der räumlichen Angabe auf Basis der Auswertung, wobei die räumliche Position in der Anlage (1) als Ort der Komponente (80) oder Anschlusselements (10) und/oder als Ort zur Installation und/oder Wartung und/oder Prüfung und/oder Modernisierung der oder mittels der Komponente (80) oder des Anschlusselements (10), insbesondere auch zum Austausch mit der Komponente (80) oder des Anschlusselements (10), angegeben wird.

8. Verfahren (100) nach einem der vorhergehenden Ansprüche,
**dadurch gekennzeichnet,**
**dass** das jeweilige Anschlusselement (10) sich bei einem Standardbetrieb der Anlage (1) in einem Standardbetriebsmodus befindet, und bei einem Installations- und/oder Wartungsbetrieb der Anlage (1) in einen Ortungsmodus überführt wird, wobei ein oder mehrere Leuchtmittel (20) des Anschlusselements (10) einem jeweiligen Anschluss (30), insbesondere Port (30), des Anschlusselements (10) zugeordnet sind, wobei der jeweilige Anschluss (30) als Anschlussfunktion, insbesondere Portfunktion, eine Signal- und/oder Datenübertragung bereitstellt, wobei die Ausgabe durch das eine oder die mehreren Leuchtmittel (20) im Standardbetriebsmodus in Abhängigkeit von der Anschlussfunktion und im Ortungsmodus in Abhängigkeit von dem ermittelten Signalisierungsschema synchronisiert mit den weiteren Anschlusselementen (10) durchgeführt wird.

9. Verfahren (100) nach einem der vorhergehenden Ansprüche,
**dadurch gekennzeichnet,**
**dass** das jeweilige Anschlusselement (10) eine Mehrzahl von Leuchtmitteln (20), vorzugsweise LEDs, aufweist, welche jeweils einem Anschluss (30), vorzugsweise Port (30), des Anschlusselements (10) zugeordnet sind und einen Betriebszustands des jeweiligen Anschluss (30) anzeigen, wobei die Anzeige des Betriebszustands in Abhängigkeit von dem ermittelten Signalisierungsschema überbrückt wird, und die Anzeige verwendet wird, um die räumliche Position für den Benutzer erkennbar zu machen, und insbesondere eine Richtungsangabe mit der Richtung zur räumlichen Position relativ zum Anschlusselement (10) anzuzeigen.

10. Verfahren (100) nach einem der vorhergehenden Ansprüche,
**dadurch gekennzeichnet,**
**dass** die Anordnungsspezifikation zumindest eine der folgenden Informationen aufweist, welche zur Ermittlung (103) des Signalisierungsschemas genutzt werden:
- Eine absolute Positionsinformation mit einer absoluten Position der Anschlusselemente (10),
- Eine relative Positionsinformation mit einer relativen Position der Anschlusselemente (10) zueinander,
- Eine Ausrichtungsinformation mit einer Angabe der Ausrichtung der Anschlusselemente (10),
wobei die Anordnungsspezifikation bei einer Installation der Anlage (1) erfasst wird, vorzugsweise durch eine Benutzereingabe und/oder durch eine sensorische Erfassung der oder durch die Anschlusselemente (10).

11. System (3) zur Ausgabe einer räumlichen Angabe bei einer industriellen Anlage (1), insbesondere einer elektrischen Maschine oder einer industriellen Automatisierungsanlage, bei welcher eine Verbindung von Komponenten (80) der Anlage (1) im Feld durch mehrere Anschlusselemente (10), welche eine Automatisierungs- und/oder Verteilungsfunktion in der Anlage (1) haben, vorgesehen ist, aufweisend:
- eine Vorrichtung (5) zum Spezifizieren (101) der räumlichen Angabe, welche für einen Benutzer ausgegeben werden soll, um eine räumliche Position in der Anlage (1) anzugeben, und zum Bereitstellen (102) einer Anordnungsspezifikation der Anschlusselemente (10), welche für eine räumliche Anordnung der Anschlusselemente (10) in der Anlage (1) spezifisch ist, sowie zum Ermitteln (103) eines Signalisierungsschemas auf Basis der spezifizierten räumlichen Angabe und der bereitgestellten Anordnungsspezifikation, wobei unter Berücksichtigung der räumlichen Anordnung der Anschlusselemente (10) eine Auswahl der Anschlusselemente (10) durch das Signalisierungsschema spezifizierbar ist, die geeignet ist, um durch eine Ausgabe durch die jeweils ausgewählten Anschlusselemente (10) die räumliche Position für den Benutzer erkennbar zu machen,
- die Anschlusselemente (10) zur Ausgabe gemäß dem ermittelten Signalisierungsschema,
**dadurch gekennzeichnet,**
**dass** das Signalisierungsschema die Auswahl der Anschlusselemente (10) derart spezifiziert, dass aus den einzelnen Ausgaben durch die jeweils ausgewählten Anschlusselemente (10) die gesamte Ausgabe der räumlichen Angabe zusammengesetzt wird, in der Form eines Musters wie einer Leuchtkette, die dem Benutzer einen Weg zu einem gesuchten Gerät (10,80) an der über die räumliche Angabe angegebenen räumlichen Position in der Anlage (1) zeigt.

12. System (3) nach Anspruch 11,
**dadurch gekennzeichnet,**
**dass** das System (3) ferner aufweist:
- wenigstens eine Steuereinrichtung (2), welche dezentral oder zentral in der Anlage (1) angeordnet ist, und über Verbindungsmittel (90), insbesondere Kabel, bevorzugt Feldbuskabel, mit den Anschlusselementen (10) zum Signal- und/oder Datenaustausch verbunden ist,
- ein oder mehrere Komponenten (80), die mit den Anschlusselementen (10) verbunden sind, um auf Basis des Signal- und/oder Datenaustausches eine Funktion der Anlage (1) bereitzustellen.

13. System (3) nach Anspruch 11 oder 12,
**dadurch gekennzeichnet,**
**dass** das jeweilige Anschlusselement (10) aufweist:
- mehrere Ausgabemittel (20), in der Form von Leuchtmitteln (20), um darüber die Ausgabe vorzunehmen,
- mehrere Anschlüsse (30), vorzugsweise Ports (30), jeweils zur Bereitstellung einer Signal- und/oder Datenübertragung mit wenigstens einer der Komponenten (80),
wobei jedem der Anschlüsse (30) mindestens zwei der Ausgabemittel (20) räumlich zugeordnet sind, und/oder dass wenigstens eines der Ausgabemittel (20) zumindest teilweise an einer Kante (41) eines Gehäuses (40) des Anschlusselements (10) angeordnet sind,
wobei jeweils ein Streu- und/oder Linsenelement (25) über den zugeordneten Ausgabemitteln (20) angeordnet ist, um die Ausgabe in der Form einer Lichtemission zu streuen und zu verteilen, wobei das jeweilige Ausgabemittel (20) und der jeweilige Anschluss (30) vorzugsweise in einem gemeinsamen Gehäuse (40) angeordnet sind.

14. Computerprogramm (6), umfassend Befehle, die bei der Ausführung des Computerprogramms (6) durch einen Computer (10) diesen veranlassen, das Verfahren (100) nach einem der Ansprüche 1 bis 10 auszuführen.

15. Vorrichtung (5) zur Datenverarbeitung, die eingerichtet ist, das Verfahren (100) nach einem der Ansprüche 1 bis 10 auszuführen.

## Claims

1. Method (100) for outputting a spatial indication in an industrial plant (1), in particular an electrical machine or an industrial automation plant, in which a connection of components (80) of the plant (1) in the field is provided by means of a plurality of connection elements (10), in particular modules (10), which have an automation and/or distribution function in the plant (1), comprising the following steps:
- specifying (101) the spatial indication which is to be output for a user in order to indicate a spatial position in the plant (1),
- providing (102) an arrangement specification of the connection elements (10), which is specific to a spatial arrangement of the connection elements (10) in the plant (1),
- determining (103) a signaling scheme on the basis of the specified spatial indication and the provided arrangement specification, wherein, taking into account the spatial arrangement of the connection elements (10), a selection of the connection elements (10) is specified by the signaling scheme, which is suitable for making the spatial position recognizable to the user by means of an output by the respectively selected connection elements (10),
- initiating (104) the output by the respectively selected connection elements (10) according to the determined signaling scheme,
**characterized in that** the signaling scheme specifies the selection of the connection elements (10) such that the overall output of the spatial indication is composed of the individual outputs by the respectively selected connection elements (10), in the form of a pattern such as a chain of lights which shows the user a route to a sought device (10, 80) at the spatial position in the plant (1) indicated by means of the spatial indication.

2. Method (100) according to claim 1,
**characterized in that**
the sought device (10, 80) is a connection element (10) or a component (80).

3. Method (100) according to one of the preceding claims,
**characterized in that**
the output by the respectively selected connection elements (10) is in each case initiated in the form of a visual output, in particular by means of a light-emitting means (20) of the respective connection element (10), in order to enable the output of the spatial indication in the form of a spatial visualization of the spatial position in the plant (1) indicated thereby.

4. Method (100) according to one of the preceding claims,
**characterized in that**
the signaling scheme specifies the selection of the connection elements (10) such that action and/or installation information is output by means of the outputs by the selected connection elements (10), in order to indicate to the user the spatial position in the plant (1) as an installation location for one of the components (80), in particular for an actuator or sensor or motor, and/or a connection element (10) and/or for a connection means, in particular for a cable or a plug connector, during installation and/or maintenance of the plant.

5. Method (100) according to one of the preceding claims,
**characterized in that**
the signaling scheme specifies the selection of the connection elements (10) such that action and/or installation information is output by means of the outputs by the selected connection elements (10), in order to indicate to the user the spatial position in the plant (1) as an action location for an installation and/or a replacement and/or a test of one of the components (80) and/or a connection element (10).

6. Method (100) according to one of the preceding claims,
**characterized in that**
for the output by the respectively selected connection elements (10) according to the determined signaling scheme:
- synchronized control of at least the selected connection elements (10) and preferably also of further connection elements of the connection elements (10) of the plant is initiated, in particular in the form of switching light-emitting means (20) of the connection elements (10) on and off according to the determined signaling scheme, and/or
- sequential control of the selected connection elements (10) is initiated such that the output takes place simultaneously only by a portion of the selected connection elements (10), and this portion changes sequentially for displaying an animation and/or a flashing pattern,
- control of the selected connection elements (10) is initiated, wherein the output comprises a plurality of colors, preferably according to a color coding.

7. Method (100) according to one of the preceding claims,
**characterized in that**,
in particular during installation and/or maintenance and/or testing and/or modernization and/or commissioning and/or during operation of the plant (1), the following further steps are provided:
- providing an identifier for identifying one of the components (80) or connection elements (10), wherein preferably the identifier results from detection of an identification means on the component (80) or the connection element (10) and/or from a user input,
- evaluating the provided identifier on the basis of installation documentation for the plant (1), in particular a digital circuit diagram and/or a spatial and/or mechanical plan of the plant (1),
- performing the specification (101) of the spatial indication on the basis of the evaluation, wherein the spatial position in the plant (1) is indicated as location of the component (80) or connection element (10) and/or as location for installation and/or maintenance and/or testing and/or modernization of or by means of the component (80) or the connection element (10), in particular also for replacement with the component (80) or the connection element (10).

8. Method (100) according to one of the preceding claims,
**characterized in that**
the respective connection element (10) is in a standard operating mode during standard operation of the plant (1), and is transferred into a locating mode during installation and/or maintenance operation of the plant (1), wherein one or more light-emitting means (20) of the connection element (10) are assigned to a respective connection (30), in particular port (30), of the connection element (10), wherein the respective connection (30), as a connection function, in particular port function, provides signal and/or data transmission, wherein the output by the one or the more light-emitting means (20) in the standard operating mode is performed as a function of the connection function and in the locating mode as a function of the determined signaling scheme, synchronized with the further connection elements (10).

9. Method (100) according to one of the preceding claims,
**characterized in that**
the respective connection element (10) comprises a plurality of light-emitting means (20), preferably LEDs, which are each assigned to a connection (30), preferably port (30), of the connection element (10) and indicate an operating state of the respective connection (30), wherein the indication of the operating state is overridden as a function of the determined signaling scheme, and the indication is used to make the spatial position recognizable to the user, and in particular to indicate directional indication with the direction to the spatial position relative to the connection element (10).

10. Method (100) according to one of the preceding claims,
**characterized in that**
the arrangement specification comprises at least one of the following items of information, which are used for the determination (103) of the signaling scheme:
- absolute position information with an absolute position of the connection elements (10),
- relative position information with a relative position of the connection elements (10) with respect to one another,
- orientation information with an indication of the orientation of the connection elements (10),
wherein the arrangement specification is recorded during installation of the plant (1), preferably by means of a user input and/or by means of sensor detection of or by the connection elements (10).

11. System (3) for outputting a spatial indication in an industrial plant (1), in particular an electrical machine or an industrial automation plant, in which a connection of components (80) of the plant (1) in the field is provided by means of a plurality of connection elements (10), which have an automation and/or distribution function in the plant (1), comprising:
- a device (5) for specifying (101) the spatial indication which is to be output for a user in order to indicate a spatial position in the plant (1), and for providing (102) an arrangement specification of the connection elements (10), which is specific to a spatial arrangement of the connection elements (10) in the plant (1), and for determining (103) a signaling scheme on the basis of the specified spatial indication and the provided arrangement specification, wherein, taking into account the spatial arrangement of the connection elements (10), a selection of the connection elements (10) can be specified by the signaling scheme, which selection is suitable for making the spatial position recognizable to the user by means of an output by the respectively selected connection elements (10),
- the connection elements (10) for outputting according to the determined signaling scheme,
**characterized in that**
the signaling scheme specifies the selection of the connection elements (10) such that the overall output of the spatial indication is composed of the individual outputs by the respectively selected connection elements (10), in the form of a pattern such as a chain of lights which shows the user a route to a sought device (10, 80) at the spatial position in the plant (1) indicated by means of the spatial indication.

12. System (3) according to claim 11,
**characterized in that**
the system (3) further comprises:
- at least one control device (2), which is arranged in a decentralized or centralized manner in the plant (1), and is connected to the connection elements (10) via connection means (90), in particular cables, preferably fieldbus cables, for signal and/or data exchange,
- one or more components (80), which are connected to the connection elements (10) in order to provide a function of the plant (1) on the basis of the signal and/or data exchange.

13. System (3) according to claim 11 or 12,
**characterized in that**
the respective connection element (10) comprises:
- a plurality of output means (20), in the form of light-emitting means (20), in order to perform the output via the same,
- a plurality of connections (30), preferably ports (30), each for providing signal and/or data transmission with at least one of the components (80),
wherein at least two of the output means (20) are spatially assigned to each of the connections (30), and/or wherein at least one of the output means (20) is arranged at least partially at an edge (41) of a housing (40) of the connection element (10),
wherein a scattering and/or lens element (25) is in each case arranged over the assigned output means (20) in order to scatter and distribute the output in the form of a light emission, wherein the respective output means (20) and the respective connection (30) are preferably arranged in a common housing (40).

14. Computer program (6), comprising instructions which, when the computer program (6) is executed by a computer (10), cause it to carry out the method (100) according to any one of claims 1 to 10.

15. Device (5) for data processing, which is configured to carry out the method (100) according to any one of claims 1 to 10.

## Revendications

1. Procédé (100) de sortie d'une indication spatiale dans une installation industrielle (1), en particulier une machine électrique ou une installation d'automatisation industrielle, dans lequel une connexion de composants (80) de l'installation (1) sur le terrain est assurée par plusieurs éléments de raccordement (10), en particulier des modules (10), qui ont une fonction d'automatisation et/ou de distribution dans l'installation (1), comprenant les étapes suivantes :
- Spécification (101) de l'indication spatiale qui doit être sortie à l'intention d'un utilisateur afin d'indiquer une position spatiale dans l'installation (1),
- Mise à disposition (102) d'une spécification de disposition des éléments de raccordement (10) spécifique à une disposition spatiale des éléments de raccordement (10) dans l'installation (1),
- Détermination (103) d'un schéma de signalisation sur la base de l'indication spatiale spécifiée et de la spécification de disposition mise à disposition, dans laquelle, compte tenu de la disposition spatiale des éléments de raccordement (10), une sélection des éléments de raccordement (10) est spécifiée par le schéma de signalisation, propre à rendre la position spatiale identifiable par l'utilisateur au moyen d'une sortie par chacun des éléments de raccordement (10) sélectionnés,
- Initiation (104) de la sortie par chacun des éléments de raccordement (10) sélectionnés conformément au schéma de signalisation déterminé,
**caractérisé en ce**
**que** le schéma de signalisation spécifie la sélection des éléments de raccordement (10) de sorte que la sortie totale de l'indication spatiale est constituée des sorties individuelles par chacun des éléments de raccordement (10) sélectionnés, sous la forme d'un motif tel qu'une chaîne lumineuse, qui indique à l'utilisateur un chemin vers un appareil recherché (10, 80) situé à la position spatiale indiquée dans l'installation (1) au moyen de l'indication spatiale.

2. Procédé (100) selon la revendication 1,
**caractérisé en ce**
**que** l'appareil recherché (10, 80) est un élément de raccordement (10) ou un composant (80).

3. Procédé (100) selon l'une quelconque des revendications précédentes,
**caractérisé en ce**
**que** la sortie par chacun des éléments de raccordement (10) sélectionnés est initiée sous la forme d'une sortie visuelle, en particulier à l'aide d'un moyen lumineux (20) de l'élément de raccordement (10) respectif, afin de permettre la sortie de l'indication spatiale sous la forme d'une visualisation spatiale de la position spatiale ainsi indiquée dans l'installation (1).

4. Procédé (100) selon l'une quelconque des revendications précédentes,
**caractérisé en ce**
**que** le schéma de signalisation spécifie la sélection des éléments de raccordement (10) de sorte qu'une information d'intervention et/ou d'installation est sortie au moyen des sorties par les éléments de raccordement (10) sélectionnés, afin d'indiquer à l'utilisateur la position spatiale dans l'installation (1) en tant que lieu d'installation pour l'un des composants (80), en particulier pour un actionneur ou un capteur ou un moteur, et/ou pour un élément de raccordement (10) et/ou pour un moyen de liaison, en particulier pour un câble ou un connecteur, lors d'une installation et/ou d'une maintenance de l'installation.

5. Procédé (100) selon l'une quelconque des revendications précédentes,
**caractérisé en ce**
**que** le schéma de signalisation spécifie la sélection des éléments de raccordement (10) de sorte qu'une information d'intervention et/ou d'installation est sortie au moyen des sorties par les éléments de raccordement (10) sélectionnés, afin d'indiquer à l'utilisateur la position spatiale dans l'installation (1) en tant que lieu d'intervention pour une installation et/ou un remplacement et/ou un contrôle de l'un des composants (80) et/ou d'un élément de raccordement (10).

6. Procédé (100) selon l'une quelconque des revendications précédentes,
**caractérisé en ce**
**que**, pour la sortie par chacun des éléments de raccordement (10) sélectionnés conformément au schéma de signalisation déterminé :
- une commande synchronisée d'au moins les éléments de raccordement (10) sélectionnés et, de préférence, également d'autres éléments de raccordement (10) de l'installation est initiée, en particulier sous la forme d'un allumage et d'une extinction de moyens lumineux (20) des éléments de raccordement (10) conformément au schéma de signalisation déterminé, et/ou
- une commande séquentielle des éléments de raccordement (10) sélectionnés est initiée, de sorte que la sortie n'est effectuée simultanément que par une partie des éléments de raccordement (10) sélectionnés, et cette partie varie séquentiellement pour représenter une animation et/ou un motif de clignotement,
- une commande des éléments de raccordement (10) sélectionnés est initiée, la sortie comprenant plusieurs couleurs, de préférence conformément à un codage couleur.

7. Procédé (100) selon l'une quelconque des revendications précédentes,
**caractérisé en ce**
**que**, en particulier lors d'une installation et/ou d'une maintenance et/ou d'un contrôle et/ou d'une modernisation et/ou d'une mise en service et/ou pendant le fonctionnement de l'installation (1), les étapes supplémentaires suivantes sont prévues :
- Mise à disposition d'un marquage pour l'identification de l'un des composants (80) ou éléments de raccordement (10), le marquage résultant de préférence d'une détection d'un moyen d'identification sur le composant (80) ou l'élément de raccordement (10) et/ou d'une saisie effectuée par l'utilisateur,
- Évaluation du marquage mis à disposition sur la base d'une documentation d'installation pour l'installation (1), en particulier d'un schéma électrique numérique et/ou d'un plan spatial et/ou mécanique de l'installation (1),
- Exécution de la spécification (101) de l'indication spatiale sur la base de l'évaluation, la position spatiale dans l'installation (1) étant indiquée en tant que lieu du composant (80) ou de l'élément de raccordement (10) et/ou en tant que lieu pour l'installation et/ou la maintenance et/ou le contrôle et/ou la modernisation du composant (80) ou de l'élément de raccordement (10) ou au moyen de celui-ci, en particulier également pour le remplacement par le composant (80) ou l'élément de raccordement (10).

8. Procédé (100) selon l'une quelconque des revendications précédentes,
**caractérisé en ce**
**que** l'élément de raccordement (10) respectif se trouve, lors d'un fonctionnement standard de l'installation (1), dans un mode de fonctionnement standard et est transféré, lors d'un fonctionnement d'installation et/ou de maintenance de l'installation (1), dans un mode de localisation, un ou plusieurs moyens lumineux (20) de l'élément de raccordement (10) étant associés à un raccordement (30) respectif, en particulier un port (30), de l'élément de raccordement (10), le raccordement (30) respectif assurant une transmission de signaux et/ou de données en tant que fonction de raccordement, en particulier en tant que fonction de port, la sortie par lesdits un ou plusieurs moyens lumineux (20) étant effectuée, dans le mode de fonctionnement standard, en fonction de la fonction de raccordement et, dans le mode de localisation, en fonction du schéma de signalisation déterminé, de manière synchronisée avec les autres éléments de raccordement (10).

9. Procédé (100) selon l'une quelconque des revendications précédentes,
**caractérisé en ce**
**que** l'élément de raccordement (10) respectif présente une pluralité de moyens lumineux (20), de préférence des LED, qui sont chacun associés à un raccordement (30), de préférence un port (30), de l'élément de raccordement (10) et indiquent un état de fonctionnement du raccordement (30) respectif, l'affichage de l'état de fonctionnement étant neutralisé en fonction du schéma de signalisation déterminé, et l'affichage étant utilisé pour rendre la position spatiale identifiable par l'utilisateur, et en particulier pour afficher une indication de direction indiquant la direction vers la position spatiale par rapport à l'élément de raccordement (10).

10. Procédé (100) selon l'une quelconque des revendications précédentes,
**caractérisé en ce**
**que** la spécification de disposition présente au moins l'une des informations suivantes, qui sont utilisées pour la détermination (103) du schéma de signalisation :
- Une information de position absolue avec une position absolue des éléments de raccordement (10),
- Une information de position relative avec une position relative des éléments de raccordement (10) les uns par rapport aux autres,
- Une information d'orientation avec une indication de l'orientation des éléments de raccordement (10),
la spécification de disposition étant détectée lors d'une installation de l'installation (1), de préférence au moyen d'une saisie par l'utilisateur et/ou d'une détection sensorielle des éléments de raccordement (10) ou par ceux-ci.

11. Système (3) de sortie d'une indication spatiale dans une installation industrielle (1), en particulier une machine électrique ou une installation d'automatisation industrielle, dans lequel une connexion de composants (80) de l'installation (1) sur le terrain est assurée par plusieurs éléments de raccordement (10), qui ont une fonction d'automatisation et/ou de distribution dans l'installation (1), présentant :
- un dispositif (5) pour la spécification (101) de l'indication spatiale qui doit être sortie à l'intention d'un utilisateur afin d'indiquer une position spatiale dans l'installation (1) et pour la mise à disposition (102) d'une spécification de disposition des éléments de raccordement (10) qui est spécifique à une disposition spatiale des éléments de raccordement (10) dans l'installation (1), ainsi que pour la détermination (103) d'un schéma de signalisation sur la base de l'indication spatiale spécifiée et de la spécification de disposition mise à disposition, dans laquelle, compte tenu de la disposition spatiale des éléments de raccordement (10), une sélection des éléments de raccordement (10) peut être spécifiée par le schéma de signalisation, propre à rendre la position spatiale identifiable par l'utilisateur au moyen d'une sortie par chacun des éléments de raccordement (10) sélectionnés,
- les éléments de raccordement (10) pour la sortie conformément au schéma de signalisation déterminé,
**caractérisé en ce**
**que** le schéma de signalisation spécifie la sélection des éléments de raccordement (10) de sorte que la sortie totale de l'indication spatiale est constituée des sorties individuelles par chacun des éléments de raccordement (10) sélectionnés, sous la forme d'un motif tel qu'une chaîne lumineuse, qui indique à l'utilisateur un chemin vers un appareil recherché (10,80) situé à la position spatiale indiquée dans l'installation (1) au moyen de l'indication spatiale.

12. Système (3) selon la revendication 11,
**caractérisé en ce**
**que** le système (3) présente en outre :
- au moins un dispositif de commande (2), qui est disposé de manière décentralisée ou centralisée dans l'installation (1) et est relié aux éléments de raccordement (10) pour l'échange de signaux et/ou de données par l'intermédiaire de moyens de liaison (90), en particulier de câbles, de préférence de câbles de bus de terrain,
- un ou plusieurs composants (80) qui sont reliés aux éléments de raccordement (10) afin d'assurer une fonction de l'installation (1) sur la base de l'échange de signaux et/ou de données.

13. Système (3) selon l'une des revendications 11 ou 12,
**caractérisé en ce**
**que** l'élément de raccordement (10) respectif présente :
- plusieurs moyens de sortie (20), sous la forme de moyens lumineux (20), pour effectuer la sortie par leur intermédiaire,
- plusieurs raccordements (30), de préférence des ports (30), chacun pour assurer une transmission de signaux et/ou de données avec au moins l'un des composants (80),
dans lequel au moins deux des moyens de sortie (20) sont associés spatialement à chacun des raccordements (30), et/ou dans lequel au moins l'un des moyens de sortie (20) est disposé au moins partiellement sur une arête (41) d'un boîtier (40) de l'élément de raccordement (10),
dans lequel un élément de diffusion et/ou un élément de lentille (25) respectif est disposé au-dessus des moyens de sortie (20) associés afin de diffuser et de répartir la sortie sous la forme d'une émission lumineuse, le moyen de sortie (20) respectif et le raccordement (30) respectif étant de préférence disposés dans un boîtier commun (40).

14. Programme informatique (6), comprenant des instructions qui, lors de l'exécution du programme informatique (6) par un ordinateur (10), amènent celui-ci à exécuter le procédé (100) selon l'une quelconque des revendications 1 à 10.

15. Dispositif (5) de traitement de données, qui est configuré pour exécuter le procédé (100) selon l'une quelconque des revendications 1 à 10.
